# EUROPÄISCHE PATENTSCHRIFT

(11) **EP 2 325 055 B1**
(45) Veröffentlichungstag und Bekanntmachung des Hinweises auf die Patenterteilung: **06.11.2013**
(21) Anmeldenummer: 10014369.2
(22) Anmeldetag: 08.11.2010
(51) Int. Cl.: B60R 16/027

(54) **Anordnung mit mindestens einem Wickelband zur Versorgung von elektrischen Bauelementen an einem drehbaren Bauteil**
Assembly with at least one coil flat cable for supplying electrical components to a rotating component
Agencement doté d'au moins une bande d'enroulement pour l'alimentation de composants électriques sur un composant rotatif

(30) Priorität: 19.11.2009 DE 102009053926
(43) Veröffentlichungstag der Anmeldung: 25.05.2011
(73) Patentinhaber: Valeo Schalter und Sensoren GmbH, 74321 Bietigheim-Bissingen (DE)
(72) Erfinder: Müller, Stefan, 97944 Boxberg (DE); Staude, Sascha, 71368 Ludwigsburg (DE); Wildt, Marcus, 74321 Bietigheim-Bissingen (DE); Haas, Philipp, 89134 Blaustein (DE)

(56) Entgegenhaltungen:
- EP-A1- 1 225 098
- DE-A1- 4 130 978
- DE-A1- 10 057 793
- DE-A1- 19 740 224
- DE-A1-102004 002 360
- DE-A1-102005 019 362

## Beschreibung

### Stand der Technik

Die Erfindung betrifft eine Anordnung mit mindestens einem Wickelband zur Energieversorgung von elektrischen Bauelementen an einem drehbaren Bauteil, zum Beispiel eines Lenkrades oder einer Lenkradsäule eines Fahrzeugs, nach dem Oberbegriff des Anspruchs 1 und ein Messverfahren nach Anspruch 4.

Es ist an sich bekannt, dass solche Wickelbänder (siehe EP 1 225 098 A) über eingebettete Leiterbahnen verfügen, die eine elektrische Verbindung vom drehbaren Bauteil zu einem ortsfesten Bauteil, herstellen. Problematisch ist hierbei die Ermittlung der thermischen Belastung des Wickelbandes zum Beispiel bei einer relativ hohen Bestromung der Leiterbahnen, z. B. bei einer Lenkradheizung. Selbst eine relativ genaue Kenntnis des hierbei fließenden elektrischen Stromes und eine Auswertung der Fahrzeuginnenraumtemperatur gibt nicht die wahre thermische Belastung des Wickelbandes wieder und kann nur entsprechend der Messungenauigkeit mit relativ hohen Sicherheitsreserven umgesetzt werden.

### Offenbarung der Erfindung

Die Erfindung geht von einer Anordnung mit mindestens einem Wickelband zur Versorgung von elektrischen Bauelementen an einem drehbaren Bauteil mit vorzugsweise eingebetteten Leiterbahnen aus, die von einem ortsfesten Bauteil zum drehbaren Bauteil führen. Um einen Selbstschutz des Wickelbandes vor thermischer Überlastung zu ermöglichen, sind zur Erfassung der thermischen Belastung im Bereich des Wickelbandes die Merkmale des Anspruchs 1 vorgesehen.

Solch ein Wickelband kann in vorteilhafter Weise zwischen einem drehbaren Lenkrad oder einer Lenksäule und einem ortsfesten Bauteil einer Fahrzeugkarosserie zur Versorgung des Lenkrades mit elektrischer Energie angeordnet werden.

Gemäß der Erfindung sind weiterhin Mittel zur Erfassung und Auswertung der Umgebungstemperatur des Wickelbandes, vorzugsweise eine elektronische Schaltung am ortsfesten oder drehbaren Bauteil vorhanden.

Vorteilhaft ist es hierbei insbesondere, wenn auch Mittel zur Erfassung des zeitlichen Anstiegs und des Abfalls der Werte der fließenden Ströme und/oder des Spannungsabfalls im Wickelband vorhanden sind.

Ein erfindungsgemäßes Messverfahren ist im Anspruch 4 definiert.

Auch eine Kombination von statischen und dynamischen Messungen von Strom oder Spannung mit der jeweiligen Änderung über der Zeit, eventuell auch in Verbindung mit einer Erfassung der Umgebungstemperatur, kann auf einfache Weise durchgeführt werden.

Somit ist eine wesentlich genauere Ermittlung der Temperatur des Wickelbandes dadurch möglich, wenn außer dem Strom durch das Wickelband auch noch die an ihm abfallende Spannung als Differenzspannung gemessen wird. Hieraus kann leicht die entstehende Verlustleistung berechnet werden. Wird außerdem der zeitliche Verlauf der anfallenden Verlustleistung ermittelt, so kann daraus die tatsächlich am Wickelband entstandene Wärmemenge ermittelt werden, aus welcher wiederum durch Kenntnis des thermodynamischen Verhaltens des Wickelbandes und dessen unmittelbarer Umgebung dessen Temperatur ermittelt werden kann.

### Kurze Beschreibung der Zeichnung

Die Erfindung wird nachfolgend anhand eines Ausführungsbeispiels näher erläutert, wobei
Figur 1 ein Wickelband zwischen einem ortsfesten Bauteil an einem Fahrzeug und einem Lenkrad,
Figur 2 ein Blockschaltbild einer Anordnung zur Übertragung von Mess- oder Schaltwerten und eine Energieübertragung zum Lenkrad und
Figur 3 ein Ersatzschaltbild der zu messenden Spannungen am Wickelband zeigt.

### Weg zur Ausführung der Erfindung

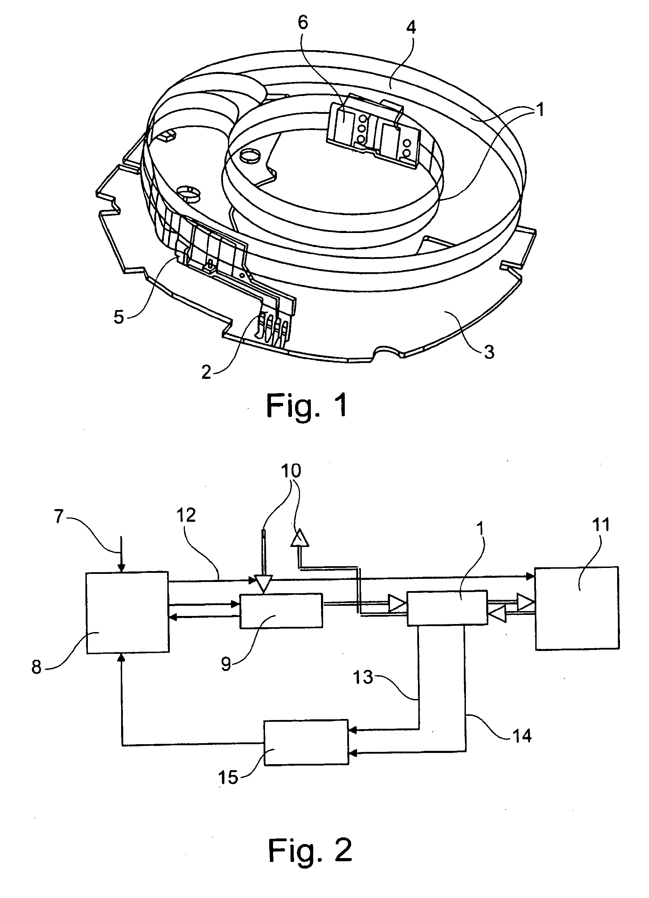

Aus Figur 1 ist eine Anordnung mit einem Wickelband 1 zu entnehmen, bei dem elektrische Leiter in dem Wickelband 1 über einen Stecker 2 mit einem ortsfesten Bauteil 3, hier Teile eines ortsfesten elektronischen Steuergeräts auf einer Leiterplatte, und über einen Stecker 4 mit einem hier nicht explizit dargestellten lenkradseitigen Steuergerät bei einem Fahrzeug verbunden sind. Die elektrischen Leiter können dabei zum Beispiel einer Versorgung einer Lenkradheizung dienen.

Figur 2 zeigt ein Blockschaltbild einer Anordnung zur Messung der Temperatur oder der Verlustleistung an dem Wickelband 1, bei der auch die Umgebungstemperatur, bzw. die Innentemperatur des Fahrzeugs gemäß Pfeil 7 in einer elektronischen Schaltung 8 verarbeitet wird.

Über einen Schalter 9 wird gemäß der Figur 2 ein Strom 10 über das Wickelband 1 auf ein Lenkrad 11, beispielweise für eine Lenkradheizung, geführt. Das Lenkrad 11 und die elektronische Schaltung 8 sind weiterhin über einen LIN-Bus 12, gegebenenfalls über weitere hier nicht näher erläuterte Wickelbänder, miteinander verbunden.

Aus der Figur 2 ist weiterhin ersichtlich, dass an das Wickelband 1 am Anfang am ortsfesten Bauteil 3 (vgl. Fig.1) eine Verbindung 13 und am Ende an dem Lenkrad 11 eine Verbindung 14 zu einem Baustein 15 und darüber zur elektronischen Schaltung 8 hergestellt ist.

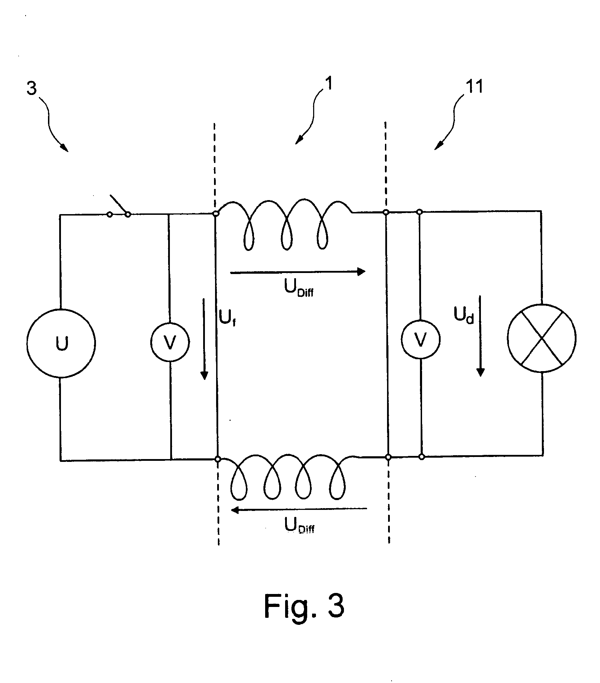

Es wird über die Verbindungen 13 und 14 ein Spannungsabfall im Verlauf des Wickelbandes 1 erfasst und im Baustein 15 als Differenzspannung ausgewertet, der anhand Figur 3 näher erläutert wird. Ferner ist hiermit auch eine Messung des zeitlichen Verlaufs des Spannungsabfalls an dem Wickelband 1 und eine Verrechnung mit dem zeitlichen Verlauf des Stroms 10 durch das Wickelband 1 möglich.

Eine diesbezügliche Spannungsmessung U_{f} erfolgt nach der Figur 3 daher erstens am ortsfesten Bauteil 3, am fahrzeugseitigen Ende des hier angedeuteten Wickelbandes 1, bzw. direkt durch die fahrzeugseitig montierte elektronische Schaltung 8 des Lenksäulenmoduls und zweitens als Messung der Spannung U_{d} am Ende des Wickelbandes 1 am Lenkrad 11, beispielsweise mit einer Rückführung einer Leitung vom lenkradseitigen Ende zur fahrzeugseitig montierten elektronischen Schaltung 8 des Lenksäulenmoduls. Aus einer Differenzbildung U_{f}-U_{d} =2U_{diff} der gemessenen Spannungswerte und gegebenenfalls unter Berücksichtigung des zeitlichen Verlaufs kann eine relativ genaue Berechnung der entstehenden Wärmemenge an dem Wickelband 1 durchgeführt werden.

## Patentansprüche

1. Anordnung mit mindestens einem Wickelband (1) zur Spannungsversorgung von elektrischen Bauelementen an einem drehbaren Bauteil mit Leiterbahnen, die von einem ortsfesten Bauteil (3) zum drehbaren Bauteil führen, **dadurch gekennzeichnet, dass** zur Erfassung der thermischen Belastung im Bereich des Wickelbandes (1) Mittel zur Erfassung des Wertes der fließenden Ströme im Wickelband (1) und der Spannungsabfälle an den Leiterbahnen des Wickelbandes (1) zur Bestimmung der Verlustleistung vorhanden sind.

2. Anordnung nach Anspruch 1, **dadurch gekennzeichnet, dass** Mittel zur Erfassung des zeitlichen Anstiegs und des Abfalls der Werte der fließenden Ströme und/oder des Spannungsabfalls im Wickelband (1) vorhanden sind.

3. Anordnung nach Anspruch 1, **dadurch gekennzeichnet, dass** Mittel zur Erfassung der Umgebungstemperatur des Wickelbandes vorgesehen sind.

4. Messverfahren zum Betrieb einer Anordnung nach einem der Ansprüche 1 bis3, **dadurch gekennzeichnet, dass** am ortsfesten Ende des Wickelbandes (1) eine Spannungsmessung (U_{f}) mittels einer elektronischen Schaltung durchgeführt wird, dass am Ende des Wickelbandes am rotierenden Bauteil eine zweite Spannungsmessung (U_{d}) durchgeführt wird, wobei deren Wert oder die Spannung selbst zur elektronischen Schaltung zurückgeführt wird, dass aus der Differenz dieser Spannungsmessungen gegebenenfalls unter Berücksichtigung des zeitlichen Verlaufs die Verlustleistung und daraus die Wärmemenge an dem Wickelband (1) bestimmt wird und dass bei Überschreitung eines vorgegebenen Schwellwertes der thermischen Belastung eine selektive Abschaltung von Verbrauchern am drehbaren Bauteil durchgeführt wird.

## Claims

1. Arrangement having at least one wound tape (1) for supplying voltage to electrical components on a rotatable part having conductor tracks which lead from a fixed part (3) to the rotatable part, **characterized in that**, in order to detect the thermal load in the region of the wound tape (1), means for detecting the value of the currents flowing in the wound tape (1) and the voltage drops across the conductor tracks of the wound tape (1) are present in order to determine the power loss.

2. Arrangement according to Claim 1, **characterized in that** means for detecting the rise over time and the fall in the values of the flowing currents and/or the voltage drop in the wound tape (1) are present.

3. Arrangement according to Claim 1, **characterized in that** means for detecting the ambient temperature of the wound tape are provided.

4. Measurement method for operating an arrangement according to one of Claims 1 to 3, **characterized in that** a voltage measurement (U_{f}) is performed at the fixed end of the wound tape (1) by means of an electronic circuit, **in that** a second voltage measurement (U_{d}) is performed at the end of the wound tape on the rotating part, the values of said voltage measurements or the voltage itself being fed back to the electronic circuit, **in that** the power loss is determined on the basis of the difference between said voltage measurements, the temporal profile optionally being taken into account, and the amount of heat at the wound tape (1) is determined on the basis of the power loss, and **in that** when a predefined threshold value for the thermal load is exceeded, loads on the rotatable part are selectively switched off.

## Revendications

1. Agencement doté d'au moins une bande d'enroulement (1) pour l'alimentation en tension de composants électriques sur un composant rotatif, comprenant des pistes conductrices qui conduisent d'un composant fixe (3) au composant rotatif, **caractérisé en ce que** pour la détection de la contrainte thermique dans la région de la bande d'enroulement (1), des moyens sont prévus pour détecter la valeur des courants circulant dans la bande d'enroulement (1) et des chutes de tension au niveau des pistes conductrices de la bande d'enroulement (1) pour déterminer la puissance dissipée.

2. Agencement selon la revendication 1, **caractérisé en ce que** des moyens sont prévus pour détecter l'augmentation dans le temps et la chute des valeurs des courants circulants et/ou la chute de tension dans la bande d'enroulement (1).

3. Agencement selon la revendication 1, **caractérisé en ce que** des moyens sont prévus pour détecter la température environnante de la bande d'enroulement.

4. Procédé de mesure pour faire fonctionner un agencement selon l'une quelconque des revendications 1 à 3, **caractérisé en ce que** l'on effectue à l'extrémité fixe de la bande d'enroulement (1) une mesure de tension (U_{f}) au moyen d'un circuit électronique, **en ce qu'**à l'extrémité de la bande d'enroulement au niveau du composant rotatif est effectuée une deuxième mesure de tension (U_{d}), sa valeur ou bien la tension elle-même étant acheminée au circuit électronique, **en ce qu'**à partir de la différence de ces mesures de tension, éventuellement en tenant compte de l'allure dans le temps, la puissance dissipée, et à partir de celle-ci, la quantité de chaleur appliquée à la bande d'enroulement (1), sont déterminées, et **en ce qu'**en cas de dépassement d'une valeur seuil prédéfinie de la contrainte thermique, une coupure sélective de consommateurs est effectuée au niveau du composant rotatif.
